# EUROPEAN PATENT SPECIFICATION

(11) **EP 0 543 296 B1**
(45) Date of publication and mention of the grant of the patent: **12.03.1997**
(21) Application number: 92119488.2
(22) Date of filing: 13.11.1992
(51) Int. Cl.: H03M 1/82

(54) **Programmable pulse-width-modulation signal generator**
Programmierbarer Impulsdauermodulationsgenerator
Générateur de signaux programmable en modulation de largeur d'impulsions

(30) Priority: 19.11.1991 KR 2057191
(43) Date of publication of application: 26.05.1993
(73) Proprietor: SAMSUNG ELECTRONICS CO. LTD., Suwon-city, Kyungki-do (KR)
(72) Inventor: Kim, Young Sun, Seoul (KR)
(74) Representative: Grünecker, Kinkeldey, Stockmair & Schwanhäusser Anwaltssozietät

(56) References cited:
- US-A- 2 954 165
- US-A- 3 810 153
- INSTRUMENTATION AND CONTROL, no.8, August 1968 pages 3 - 5 MARKOW ET AL 'a multichannel digital-analogue converter'

## Description

### BACKGROUND OF THE INVENTION

The present invention relates to an apparatus for generating pulse-width-modulation (PWM) pulses, and more particularly to a programmable PWM signal generator for selectively generating a plurality of PWM signals having different pulse widths to each other.

Such a PWM signal generator is known from US-A-2 954 165.

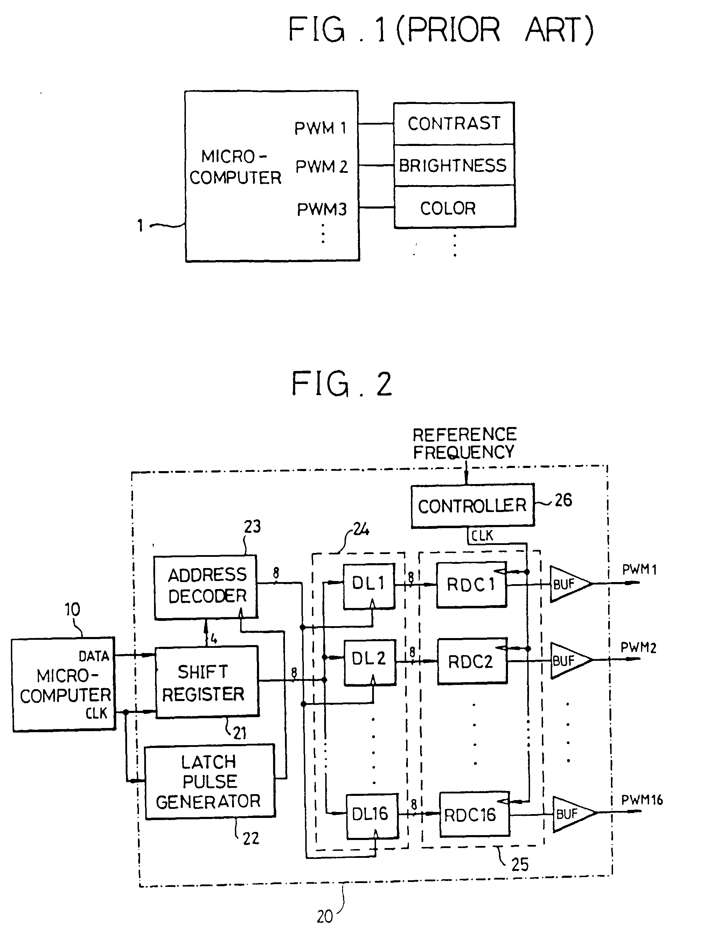

Generally, in a television circuit, volumn, contrast, brightness, color, peaking, tint, treble, bass and balance are respectively controlled by PWM pulses having different pulse widths to each other. Accordingly, when the PWM pulses are required in a conventional television circuit, a microcomputer having internal PWM signal generators has been used. In case of the weak PWM pulse output, an integrated citcuit for a digital to analog convertor has been used. FIG.1 shows a conventional microcomputer in which programmable PWM signal generators are internally installed. In FIG.1, microcomputer 1 having a number of internal PWM signal generators produces output signals PWM1, PWM2, PWM3, ···.

However, to control the above various functions, such a conventional technology has the difficulty in internally installing nine PWM signal generators within the microcomputer. Accordingly, selection of a microcomputer is limited. Also, cost of the product rises up and reliability of the product lowers.

### SUMMARY OF THE INVENTION

Therefore, to solve the above defects, it is an object of the present invention to provide a programmable PWM signal generator for selectively generating a number of PWM pulses having different pulse widths to each other, according to control signals supplied from a microcomputer.

It is another object of the present invention to provide a programmable PWM signal generator which can be controlled by two lines of a clock line and a data line for interface connection with a microcomputer, using a serial data line of the microcomputer.

To accomplish the above objects, there is provided a programmable pulse-width-modulation signal generator adapted in a television system having a microcomputer, comprising, a shift register portion connected to the microcomputer and for storing transmitted data, a latch pulse generating portion for counting the number of data bits of the microcomputer and for generating an address latch pulse if the counted value reaches a predetermined value, an address decoding portion for generating an enable latch pulse corresponding to an output of the shift register portion according to the address latch pulse, a data latch portion comprising a number of data latches in which a value corresponding to the data output from the shift register portion is latched according to the enable latch pulse, a reloadable down-counter portion comprising a number of reloadable down-counters correspondingly connected to the plurality of data latches and being in a waiting state according to the latch result of each of the data latches, alc a control portion for reloading the reloadable down-counter portion according to a clock having a reference frequency.

### BRIEF DESCRIPTION OF THE DRAWINGS

These and other objects, features, aspects and advantages of the present invention will become more apparent from the following detailed description of the present invention when taken in conjuntion with the accompanying drawings:
FIG.1 is a block diagram for explaining a conventional programmable pulse-width-modulation (PWM) signal generator;
FIG.2 is a block diagram of a programmable PWM signal generator according to the present invention;
FIG.3 is a format diagram of data adapted in the present invention;
FIG.4 is a detailed circuit diagram of the shift register portion and the latch pulse generator shown in FIG.2;
FIG.5 is a detailed circuit diagram of the address decoder portion shown in FIG.2; and
FIG.6 is a detailed circuit diagram of the data latch portion, the reloadable down-counter portion and the controller shown in FIG.2.

### DETAILED DESCRIPTION OF THE PREFERRED EMBODIMENT OF THE INVENTION

Now, construction and operation of a programmable PWM signal generator according to the present invention will be described below in detail with reference to the accompanying drawings.

In FIG.2, a programmable PWM signal generator 20 according to the present invention is controlled by two lines composed of data line DATA and clock line CLK supplied from a microcomputer 10. Programmable PWM signal generator 20 selectively generates a predetermined number of PWM pulses corresponding to the input data. For example, PWM signal generator 20 selects one among n units of PWM pulses for output(here, n is integer).

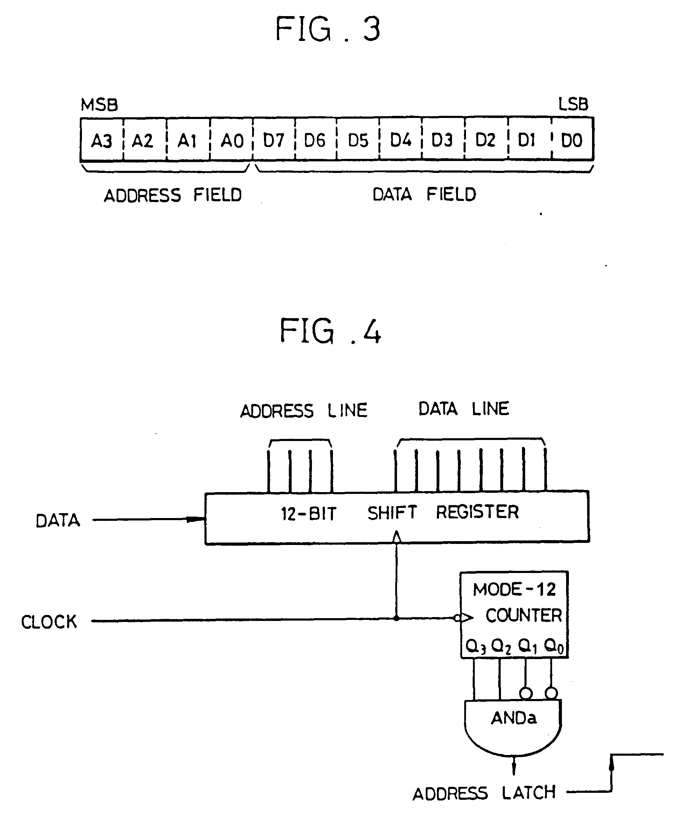

In programmable PWM signal generator 20 according to the present invention, data composed of an address field having four bits A0 to A3 and a data field having eight bits D0 to D7 as shown in FIG.3 are transmitted to shift register portion 21 of FIG.2, starting from a least significant bit LSB and stored therein. A latch pulse generator 22 is connected to a clock line CLK of microcomputer 10, and counts the number of the data bits. Accordingly, if the counted result reaches a predetermined value, an address latch pulse is generated. An address decoder portion 23 outputs a high enable latch signal corresponding to address signal A3A2A1A0 according to the address latch pulse. A data latch portion 24 comprises a number of data latches DL1 to DL16 in which a value of the data line is latched only on a corresponding data latch according to the enable latch pulse. A reloadable counter portion 25 comprises a number of reloadable down-counters RDC1 to RDC16 which are correspondingly connected to a number of data latches DL1 to DL16, and are reloaded when the value of the data line is latched. A controller 26 counts a reference frequency to reload the reloadable down-counter. Then, the reloadable down-counter counts down when the counted value is zero.

The constitution and the operation of the present invention will be described in more detail below, with reference to the accompanying drawings FIGs. 4 to 6 which are embodiment drawings for the respective parts of FIG.2.

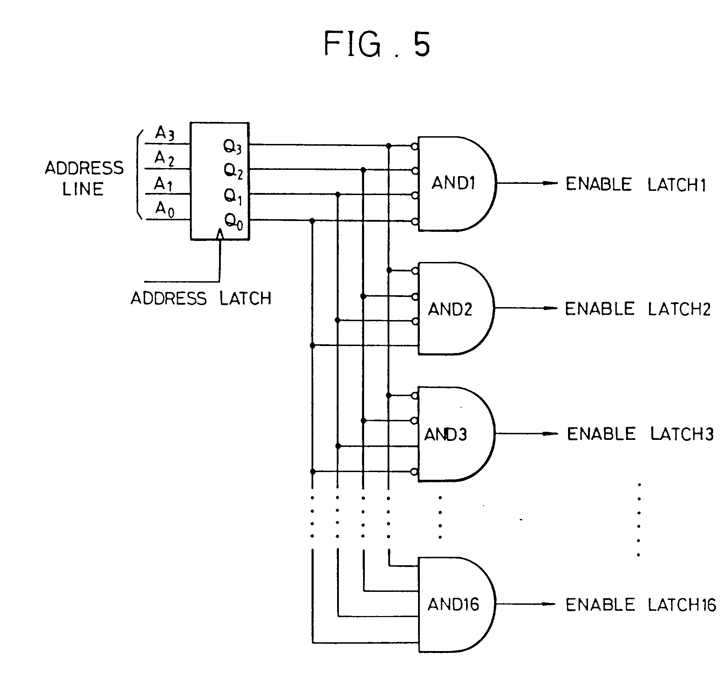

As shown in FIG.4, shift register portion 21 comprises a 12-bit shift register in which data composed of 4-bit address field A0 to A3 and a 8-bit data field D0 to D7 shown in FIG.3 is transmitted and stored. Shift register portion 21 is connected to a data terminal DATA and a clock terminal CLK in a microcomputer 10, to thereby supply the 4-bit address signal through 4-bit address lines for address decoding portion 23 and the 8-bit data signal through 8-bit address lines for data latch portion 24. A latch pulse generator 22 comprising a mode- 12 counter and an AND gate ANDa is connected to clock terminal CLK of microcomputer 10. Latch pulse generator 22 counts the number of bits of the input data. Here, if the counted value is 12, output Q₃Q₂Q₁Q₀ becomes 1100, thereby generating an address latch pulse. As shown in FIG.5, address decoding portion 23 which is connected to the address line being an output terminal of shift register portion 21 comprises a 4-bit latch and 16 units of AND gates AND1 to AND16. Accordingly, address decoding portion 23 latches address signal A3A2A1A0 in accordance with the address latch pulse and generates one of the enable latch pulses corresponding to the value Q₃Q₂Q₁Q₀ output from the 4-bit latch, as a high pulse.

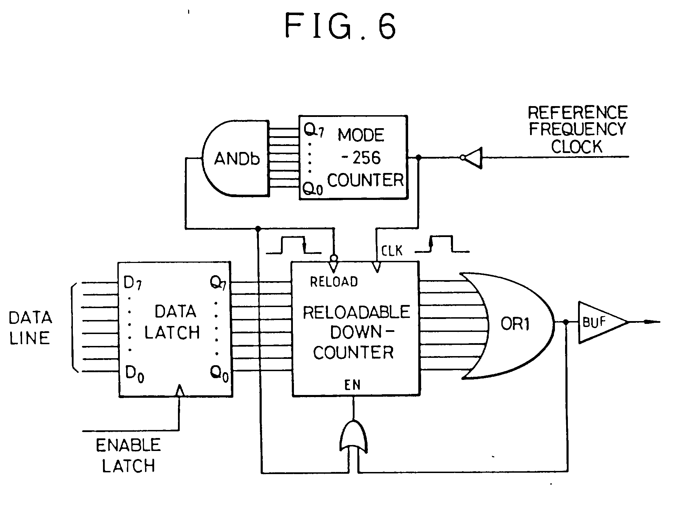

In FIG.6, data latch portion 24 which is connected to the data line of shift register portion 21 comprises 16 units of data latches DL1 to DL16. Here, the value of the data line for each of data latches DL1 to DL16 is latched only in the data latch corresponding in address decoding portion 23. At this time, one input of reloadable down-counter portion 25 which is connected to the output of data latch portion 24 becomes to be in a waiting state. Control portion 26 comprising AND gate ANDb and mode-256 counter reloads reloadable down-counter portion 25 at the time when the output becomes again low if the value of mode-256 counter, that is, 8-bit output is high. That is, the reloaded value is counted down to finally become 0. Then, the output of reloadable down-counter passes through OR gate OR1, to become 0. Accordingly, since the enable signal is changed into 0 from 1, the reloaded value is not counted down even if the clock signal continues to input, thereby maintaining the value of 0. When the outputs of the mode-256 counter are all high, the enable signal becomes again high. Accordingly, the data latch output is reloaded into the reloadable down-counter, and the output of OR gate OR1 becomes high. Reloadable down-counter counts down the reloaded value until the reloadable down-counter generates 0. In the present embodiment, address bits are four bits, to thereby obtain 16 units of PWM signal outputs. However, the number of address bits can be randomly set, to thereby obtain 2ⁿ (here, n is the number of address bits) units of PWM signal outputs.

As described above, in the present invention, serial data are supplied to the PWM signal generator which generates the PWM pulses proportional to the supplied data. Particularly, to make a number of PWM pulses each having a desired pulse width, serial data is transmitted together with the address information capable of addressing a PWM signal, to generate a number of PWM pulses. The present invention is adapted to a PWM signal varying system for controlling volume, contrast and brightness, etc of the television system, thereby fulfilling an easy controlling and demand of a number of PWM pulses.

## Claims

1. A programmable pulse-width-modulation signal generator adapted in a television system having a microcomputer, comprising:
a shift register portion connected to the microcomputer and for storing transmitted data;
a latch pulse generating portion for counting the number of data bits of the microcomputer and for generating an address latch pulse if the counted value reaches a predetermined value;
an address decoding portion for generating an enable latch pulse corresponding to an output of the shift register portion according to the address latch pulse;
a data latch portion comprising a number of data latches in which a value corresponding to the data output from the shift register portion is latched according to the enable latch pulse;
a reloadable down-counter portion comprising a number of reloadable down-counters correspondingly connected to the plurality of data latches and being in a waiting state according to the latch result of each of the data latches; alc
a control portion for reloading the reloadable down-counter portion according to a clock having a reference frequency.

2. The programmable pulse-width-modulation signal generator according to claim 1, wherein said latch pulse generator comprises a mode-12 counter connected to a clock terminal of the micorcomputer and an AND gate for logically multiplying the value of the mode-12 counter.

3. The programmable pulse-width-modulation signal generator according to claim 1, wherein said address decoding portion comprises a 4-bit latch for decoding an output of said shift register portion and a plurality of AND gates for having a corresponding enable latch generate a high pulse according to a value of said 4-bit latch.

4. The programmable pulse-width-modulation signal generator according to claim 1, wherein said control portion comprises a mode-256 counter for counting a clock having a reference frequency and an AND gate for logically multiplying an output of said mode-256 counter and for reloading said reloadable down-counter.

5. The programmable pulse-width-modulation signal generator. according to claim 1, further comprising an OR gate for logically summing output values of said reloadable down-counter and for feeding back said logically summed value to an enable terminal of said reloadable down-counter.

## Patentansprüche

1. Programmierbarer Impulsdauermodulationssignalgenerator für ein Fernsehsystem, das einen Mikrocomputer hat, mit:
einem mit dem Mikrocomputer verbundenen Schieberegisterteil zum Speichern von gesendeten Daten;
einem Verriegelungsimpulsgeneratorteil zum Zählen der Anzahl von Datenbits des Mikrocomputers und zum Erzeugen eines Adressenverriegelungsimpulses, wenn der gezählte Wert einen vorbestimmten Wert erreicht;
einem Adressendekodierteil zum Erzeugen eines Ermöglichungsverriegelungsimpulses, der einem Ausgangssignal des Schieberegisterteils nach Maßgabe des Adressenverriegelungsimpulses entspricht;
einem Datenverriegelungsteil, der eine Anzahl von Datenverriegelungen aufweist, in denen ein Wert, der dem Datenausgangssignal von dem Schieberegisterteil entspricht, nach Maßgabe des Ermöglichungsverriegelungsimpulses verriegelt wird;
einem wiederaufladbaren Herunterzählerteil, der eine Anzahl von wiederaufladbaren Herunterzählern aufweist, die entsprechend mit der Vielzahl von Datenverriegelungen verbunden sind und nach Maßgabe des Verriegelungsergebnisses einer jeden der Datenverriegelungen in einem Wartezustand sich befinden; und
einem Steuerteil zum Wiederaufladen des wiederaufladbaren Herunterzählerteils nach Maßgabe eines Taktes, der eine Bezugsfrequenz hat.

2. Programmierbarer Impulsdauermodulationssignalgenerator nach Anspruch 1, wobei der Verriegelungsimpulsgenerator einen Mode-12-Zähler aufweist, der mit einem Taktanschluß des Mikrocomputers und einem UND-Glied zum logischen Multiplizieren des Wertes des Mode-11-Zählers verbunden ist.

3. Programmierbarer Impulsdauermodulationssignalgenerator nach Anspruch 1, wobei der Adressendekodierteil eine 4-Bit-Verriegelung zum Dekodieren eines Ausgangssignals des Schieberegisterteils und eine Vielzahl von UND-Gliedern aufweist, die eine entsprechende Ermöglichungsverriegelung haben und einen hohen Impuls nach Maßgabe eines Wertes der 4-Bit-Verriegelung erzeugen.

4. Programmierbarer Impulsdauermodulationssignalgenerator nach Anspruch 1, wobei der Steuerteil einen Mode-256-Zähler zum Zählen eines Taktes, der eine Bezugsfrequenz hat, und ein UND-Glied zum logischen Multiplizieren eines Ausgangssignals des Mode-256-Zählers und zum Wiederaufladen des wiederaufladbaren Herunterzählers aufweist.

5. Programmierbarer Impulsdauermodulationssignalgenerator nach Anspruch 1, der weiterhin ein ODER-Glied zum logischen Summieren der Ausgangswerte des wiederaufladbaren Herunterzählers und zum Zurückführen des logisch summierten Wertes an einen Ermöglichungsanschluß des wiederaufladbaren Herunterzählers aufweist.

## Revendications

1. Générateur de signaux programmable en modulation de largeur d'impulsions adapté à un système de télévision ayant un microcontrôleur, comprenant :
- une partie registre à décalage connectée au microcontrôleur et destinée à mémoriser des données transmises ;
- une partie générateur d'impulsions de verrouillage destinée à compter le nombre de bits de données du microcontrôleur et destinée à générer une impulsion de verrouillage d'adresse si la valeur comptée atteint une valeur prédéfinie ;
- une partie décodeur d'adresse destinée à générer une impulsion de validation de verrouillage correspondant à une sortie de la partie registre à décalage selon l'impulsion de verrouillage d'adresse ;
- une partie verrouillage de données comprenant un certain nombre de registres à verrouillage de données dans lesquels une valeur correspondant à la sortie de données venant de la partie registre à décalage est mémorisée lors de l'impulsion de validation de verrouillage ;
- une partie compteur à rebours rechargeables comprenant un certain nombre de compteurs à rebours rechargeables connectés respectivement à l'ensemble des registres à verrouillage de données et se trouvant dans un état d'attente selon le résultat après verrouillage de chacun des registres à verrouillage de données ; et
- une partie de pilotage destinée à recharger la partie compteur à rebours rechargeable selon une horloge délivrant une fréquence de référence.

2. Générateur de signaux programmable en modulation de largeur d'impulsions selon la revendication 1, dans lequel ledit générateur d'impulsion à verrouillage comprend un compteur modulo 12 connecté à une sortie horloge du microcontrôleur et une porte ET destinée à effectuer une multiplication logique de la valeur du compteur modulo 11.

3. Générateur de signaux programmable en modulation de largeur d'impulsions selon la revendication 1, dans lequel ladite partie décodeur d'adresse comprend un registre à verrouillage de 4 bits destiné à décoder une sortie de ladite partie registre à décalage et un ensemble de portes ET destinées à avoir une validation de verrouillage correspondante générant une impulsion positive selon une valeur dudit registre à verrouillage de 4 bits.

4. Générateur de signaux programmable en modulation de largeur d'impulsions selon la revendication 1, dans lequel ladite partie de pilotage comprend un compteur modulo 256 destiné à compter les impulsions d'une horloge ayant une fréquence de référence et une porte ET destinée à effectuer une multiplication logique d'une sortie dudit compteur modulo 256 et à recharger ledit compteur à rebours rechargeable.

5. Générateur de signaux programmable en modulation de largeur d'impulsions selon la revendication 1, comprenant en outre une porte OU pour effectuer une addition logique des valeurs en sortie dudit compteur à rebours rechargeable et pour retourner ladite valeur additionnée de manière logique vers une sortie validée dudit compteur à rebours rechargeable.
